# EUROPEAN PATENT APPLICATION

(11) **EP 4 472 001 A1**
(43) Date of publication of application: **04.12.2024**
(21) Application number: 24179112.8
(22) Date of filing: 30.05.2024
(51) Int. Cl.: H02G 1/00, H02G 3/08, H02G 3/00, H02G 3/30, B25H 7/02

(54) **WIRING BOX FOR POWER GENERATION SYSTEM**

(30) Priority: 30.05.2023 US 202363504980 P
(71) Applicant: Solaredge Technologies Ltd., Herzeliya 4673335 (IL)
(72) Inventor: MAGALI, Niv, 4673335 Herzeliya (IL); SCHWARTZ, Guy, 4673335 Herzeliya (IL); SHRIKI, Dan, 4673335 Herzeliya (IL)
(74) Representative: V.O.

(57) **Abstract**

A wiring box comprising a housing and a cover for electrically connecting between multiple power devices of a building is disclosed. The housing may include a ground bar for connecting the ground of multiple power devices. The housing may include cut-outs for fittings between the wiring box and the power devices. The cut-outs may be configured to allow different configurations of power devices, e.g., different size and shape of power devices at the same location on the housing. Different orientations may allow different spatial relationships between the power devices. For example, in a first orientation, an inverter may be positioned to the left of a backup interface unit above the wiring box, and in a second orientation, the inverter may be positioned to the right of the backup interface unit above the wiring box. The wiring box may include recesses for positioning drill hole alignment tools.

## Description

### BACKGROUND

The present disclosure relates to the field of power device wiring. In power generation systems, multiple power devices may be connected using fittings and off-the-shelf gutters customized for each system installation. The gutters are placed between or near the power devices, and the fittings are custom-bent onsite to match the fitting holes on the gutter with the fitting holes on each power device.

### SUMMARY

The following is a short summary of some of the inventive concepts for illustrative purposes only and is not an extensive overview and is not intended to identify key or critical elements or to limit or constrain the inventions and examples in the detailed description. One skilled in the art will recognize other novel combinations and features from the detailed description.

The present disclosure describes a wiring box for electrically connecting multiple power devices of a residence or building. The wiring box may include a housing and a cover, where the cover may be configured to be installed in two or more orientations. The housing may include a ground bar for connecting the ground of multiple power devices. The housing may include cut-outs for standardized fittings between the wiring box and the power devices. The fittings may fit between the cut-outs of the wiring box and fitting holes of the power device. The fittings may allow wiring from the power device to pass through the fitting holes, fittings, and cut-outs to connect the wiring to other devices of a residence. The cut-outs may be configured to allow different configurations of power devices, such as different numbers and locations of fittings between the power device and the wiring box. The location of the cut-outs on the wiring box matches the location of the fitting holes on the power device. Different sets of cut-outs on the wiring box housing may match different power devices, or different configurations of power devices. For example, the cut-outs may be configured for different sizes and shapes of power devices at the same location on the housing. The different orientations may allow different spatial relationships between the power devices. For example, in a first orientation, an inverter may be positioned to the left of a backup interface unit above the wiring box, and in a second orientation, the inverter may be positioned to the right of the backup interface unit above the wiring box.

The wiring box may include recesses and/or protrusions for positioning drill hole alignment tools. For example, the wiring box may include a recess for positioning a drill hole alignment tool for a power device bracket, such as a fast mount bracket. For example, the wiring box may include a protrusion for positioning a drill hole alignment tool configured for a power device or a power device bracket. As another example, the wiring box may include a recess and/or a protrusion for positioning a drill hole alignment tool for a power device or power device bracket. A drill hole alignment tool may include multiple drill hole guides for different power devices. The wiring box alignment tool recess may include a protrusion incorporated therein and the alignment tool may include a recess configured to engulf the protrusion, thereby accurately positioning the alignment tool relative to the fitting cut-outs. The alignment tool may include a template for drill holes that attach a bracket of the power device to the wall above or below the wiring box.

The wiring box may include limit markers for regions of the housing where opening new fitting holes may be performed without affecting the internal components of the wiring box. The wiring box may include rounded corners for improved structural stability and mechanical strength. The wiring box may include wall attachment holes for securing the wiring box to a wall, where the wall attachment holes are at predetermined intervals such as corresponding to support structures for a drywall. For example, the wall attachment holes are spaced 18 inches apart to correspond to the stud distance used in constructing drywalls in North America. The wiring box may include internal walls and wire guides.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures. In the drawings, like numerals reference similar elements.
FIG. 1A shows, schematically, an example wiring box and power devices in a first configuration according to aspects of the disclosure.
FIG. 1B shows, schematically, an example wiring box and power devices in a second configuration according to aspects of the disclosure.
FIG. 2 shows, schematically, an example wiring box kit according to aspects of the disclosure.
FIG. 3A shows, schematically, a first side view of an example wiring box housing according to aspects of the disclosure.
FIG. 3B shows, schematically, a bottom view of an example wiring box housing according to aspects of the disclosure.
FIG. 3C shows, schematically, a second side view of an example wiring box housing according to aspects of the disclosure.
FIG. 4 shows, schematically, a perspective view of an example wiring box housing according to aspects of the disclosure.
FIG. 5 shows, schematically, an example wiring box housing with alignment tools and power device brackets according to aspects of the disclosure.
FIG. 6 shows, schematically, a detailed view of an example wiring box alignment tool recess and alignment tool base according to aspects of the disclosure.
FIG. 7 shows, schematically, a flowchart of an example method of installing a wiring box according to aspects of the disclosure.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

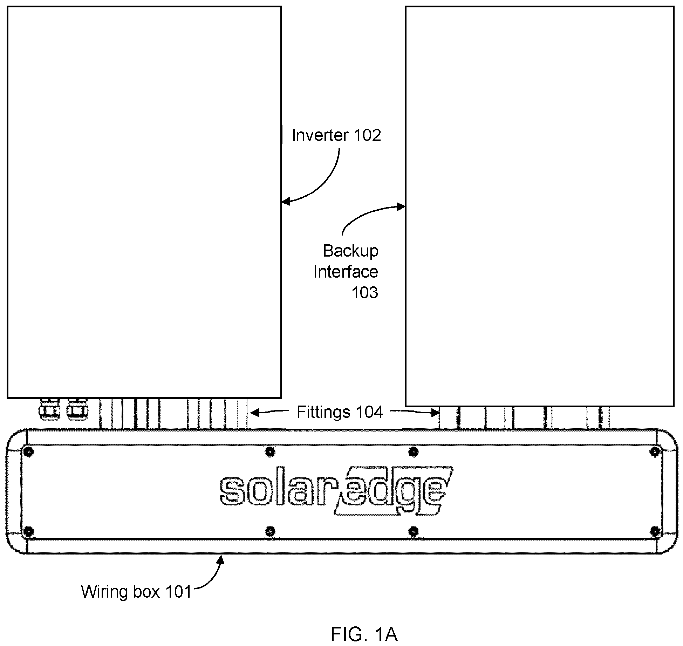

Reference is now made to FIG. 1A, which shows, schematically, an example wiring box 101, inverter 102, and backup interface 103 in a first configuration according to aspects of the disclosure. The inverter 102 and backup interface 103 may be referred to as "power devices." Similarly, other devices that may be installed near wiring box 101 may be referred to as "power devices," such as energy storage devices (batteries), electrical vehicle chargers, load panels, load centers, breaker boxes, utility meters, main utility disconnect, fuel cell devices, heating units, cooling units, and heat exchanges. Inverter 102 and backup interface unit 103 are used here as examples of two power devices, but other power devices may be used as alternatives. In general, wiring box 101 may be used to connect wires from two or more power devices. For example, inverter 102 may be wired to backup interface unit 103 and an electrical distribution panel. Fittings 104 may be used between inverter 102 and wiring box 101. Fittings 104 may be straight and of a predetermined length. Fittings 104 may be used between backup interface unit 103 and wiring box 101. The wires between the two power devices may pass through fittings 104 and wiring box 101. In this configuration, the power devices are above wiring box 101, and inverter 102 is to the left of backup interface unit 103. This configuration may be turned 180 degrees and arranged so that wiring box 101 is above the power devices, such that inverter 102 is to the right of backup interface unit 103.

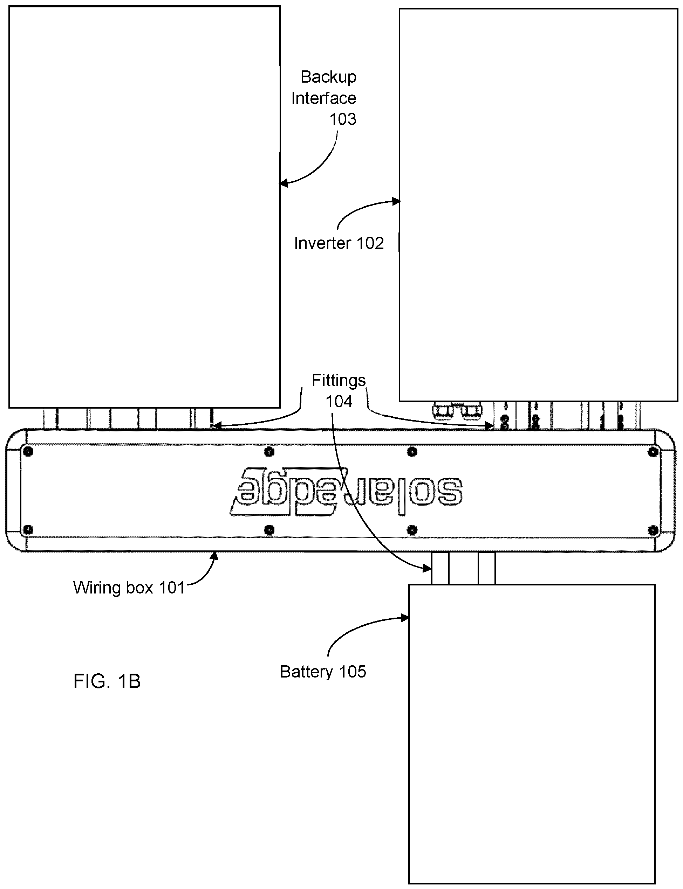

Reference is now made to FIG. 1B, which shows, schematically, an example wiring box 101 and power devices in a second configuration according to aspects of the disclosure. The power devices of this illustration show similar arrangement as FIG. 1A, but in a different configuration. In this configuration, the power devices are above and below wiring box 101, inverter 102 is to the right of backup interface unit 103, and battery 105 is below wiring box 101. This configuration may be turned 180 degrees, and arranged so that wiring box 101 is above the power devices, such that inverter 102 is to the left of backup interface unit 103, and battery 105 is above wiring box 101. Further configurations of power devices relative to the wiring box may include power devices above and below wiring box 101. Further configurations of power devices relative to wiring box 101 may include power devices above and to the left side of wiring box 101, where fittings 104 may include right angle fittings and appropriate alignment guides directed to the left of wiring box 101. Further configurations of power devices relative to wiring box 101 may include power devices above and to the right side of wiring box 101, where fittings 104 may include right angle fittings and appropriate alignment guides directed to the right of wiring box 101. Further configurations of power devices relative to wiring box 101 may include power devices on all sides of wiring box 101.

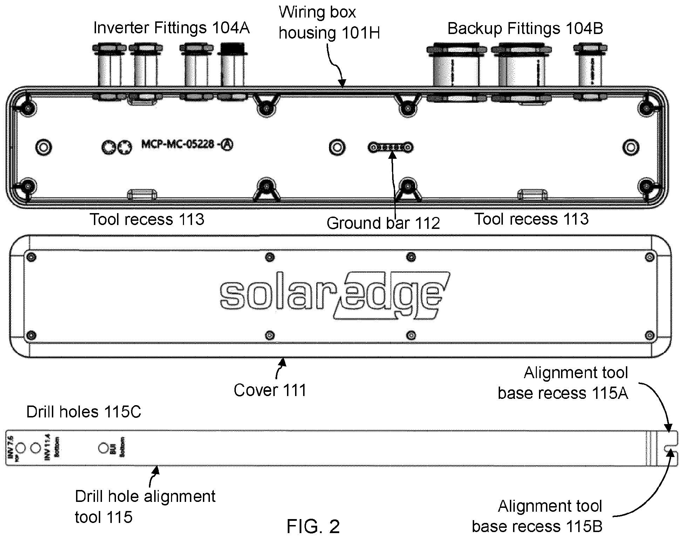

Reference is now made to FIG. 2, which shows, schematically, an example wiring box 101 kit according to aspects of the disclosure. Wiring box 101 kit may include separate fittings configured for each type of power device, such as inverter fittings 104A for an inverter and backup fittings 104B for a backup interface unit. Wiring box housing 101H may include tool recess 113 for positioning drill hole alignment tool 115 relative to cut-out holes in wiring box housing 101H. Drill hole alignment tool 115 positions a drill so that holes may be drilled into the wall behind wiring box 101, such as for a power device or a bracket for the respective power device. Cover 111 of wiring box 101 may be attached to wiring box housing 101H using bolts, screws, snap-fit connectors, or a combination thereof. Cover 111 of wiring box 101 may include a seal, such as an overmolded seal, an o-ring seal, or a gasket. Drill hole alignment tool 115 may include multiple drill holes 115C, where different drill holes may be configured to align different power devices. Alignment tool base recess 115A of drill hole alignment tool 115 may include alignment tool base recess 115B that can assist in positioning drill hole alignment tool 115 accurately relative to the cut-out holes. Drill hole alignment tool 115 may be configured for one or more of different kinds of power devices, such as different kinds of inverters, different kinds of backup interfaces, different kinds of electrical energy storage devices (batteries), and other devices associated with a power generation system.

While reference is made herein to "cut-outs," these may comprise pre-cut holes, areas manufactured for punch-out, areas marked to be cut out, or any other such aperture or area for creating an aperture.

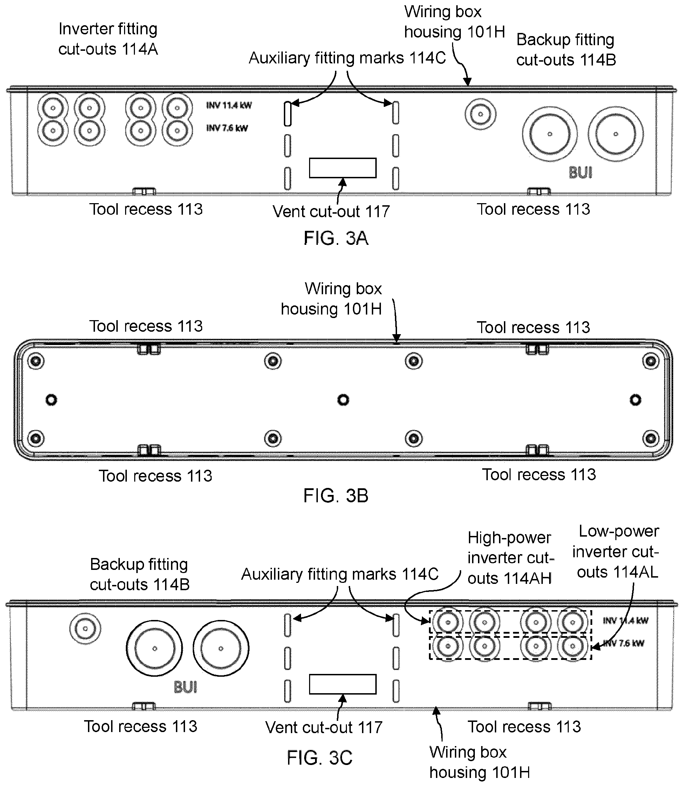

Reference is now made to FIG. 3A, which shows, schematically, a first side view of an example wiring box housing 101H according to aspects of the disclosure. Wiring box housing 101H may include inverter fitting cut-outs 114A on the sides, such as cut-outs for more than one type of inverter. For example, each set of cut-outs is matched in number and location of the cut-outs to a different type of power device, such as a different make and/or model of inverter. Wiring box housing 101H may include backup fitting cut-outs 114B on the sides. Wiring box housing 101H may include auxiliary fitting marks 114C on the sides for cutting holes in wiring box housing 101H without damaging internal structures. Wiring box housing 101H may include tool recesses 113 on the sides of wiring box housing 101H and aligned with inverter fitting cut-outs 114A and/or backup fitting cut-outs 114B. Wiring box housing 101H may include vent cut-outs 117 on the sides. Vent cut-outs 117 may be used to insert breathing vents on the sides of wiring box housing 101H to allow air circulation and moisture drainage.

Reference is now made to FIG. 3B, which shows, schematically, a bottom view of an example wiring box housing 101H according to aspects of the disclosure. Wiring box housing 101H may include alignment tool recesses 113 on both sides of wiring box housing 101H. Each tool recess 113 is configured to align drill holes for a power device bracket such that the fittings are aligned between the fitting holes of the power device and the cut-out fitting holes in wiring box housing 101H.

Reference is now made to FIG. 3C, which shows, schematically, a second side view of an example wiring box housing 101H according to aspects of the disclosure. Wiring box housing 101H may include multiple power device cut-outs, such as high-power inverter cut-outs 114AH and low-power inverter cut-outs 114AL. Wiring box housing 101H may include backup fitting cut-outs 114B on the sides. Wiring box housing 101H may include auxiliary fitting marks 114C on the sides for cutting holes in wiring box housing 101H without damaging internal structures. Wiring box housing 101H may include alignment tool recesses 113 on the sides of wiring box housing 101H and aligned with the cut-outs. Wiring box housing 101H may include vent cut-out 117 on the sides.

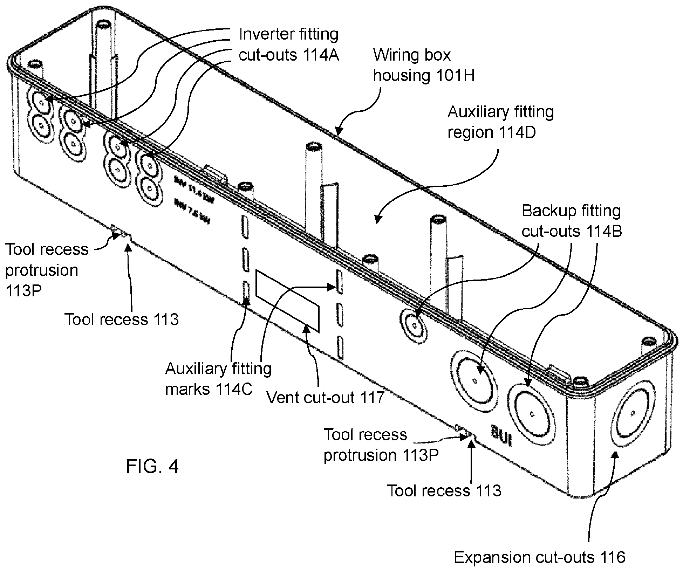

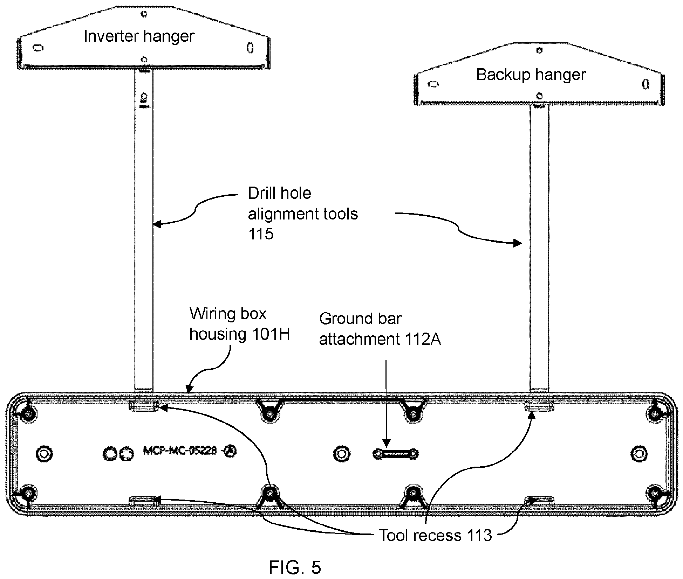

Reference is now made to FIG. 4, which shows, schematically, a perspective view of an example wiring box housing 101H according to aspects of the disclosure. Wiring box housing 101H may include multiple power device cut-outs, such as inverter fitting cut-outs 114A and backup fitting cut-outs 114B on both sides of wiring box housing 101H. Wiring box housing 101H may include auxiliary fitting marks 114C on both sides for cutting holes in wiring box housing 101H at auxiliary fitting region 114D without damaging internal structures. Wiring box housing 101H may include alignment tool recesses 113 on both sides of wiring box housing 101H. Tool recess 113 may include tool recess protrusion 113P to assist in positioning drill hole alignment tool 115 using recess 115B. Wiring box housing 101H may include vent cut-out 117 on the sides. Wiring box housing 101H may include one or more expansion cut-outs 116 on the left and right sides of wiring box housing 101H. Expansion cut-outs 116 may be used to expand wiring box housing 101H interconnect to a neighboring wiring box, combiner box, or power device located to the left or right sides of wiring box housing 101H.

Reference is now made to FIG. 5, which shows, schematically, an example wiring box housing 101H with drill hole alignment tools 115 and power device brackets according to aspects of the disclosure. Wiring box housing 101H may include ground bar attachment 112A for attaching ground bar 112 to wiring box housing 101H. Drill hole alignment tools 115 may be positioned within tool recesses 113. Drill hole alignment tools 115 may be used to drill holes in the wall for attaching a power device securing brackets of the power device to the wall, such as inverter hanger bracket and backup interface unit hanger bracket.

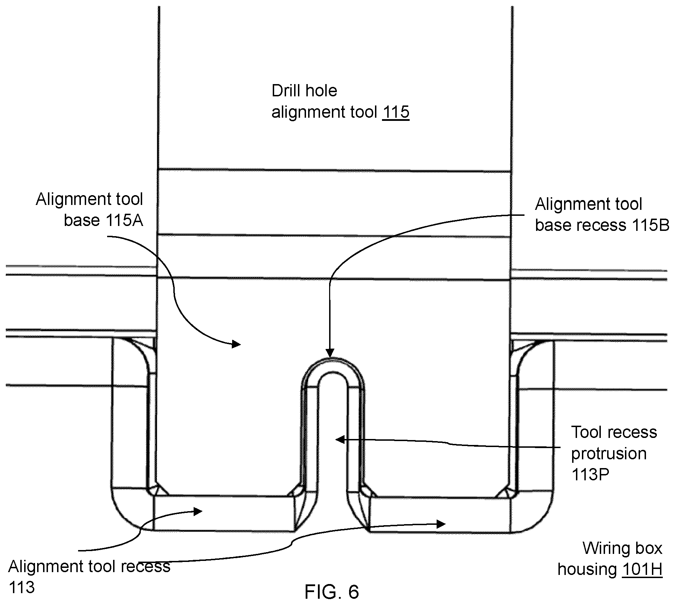

Reference is now made to FIG. 6, which shows, schematically, a detailed view of an example wiring box alignment tool recess 113 and alignment tool base 115A according to aspects of the disclosure. Wiring box housing 101H may include multiple alignment tool recesses 113. Alignment tool recess 113 may include tool recess protrusion 113P. Drill hole alignment tools 115 may include alignment tool base recess 115B configured to match tool recess protrusion 113P.

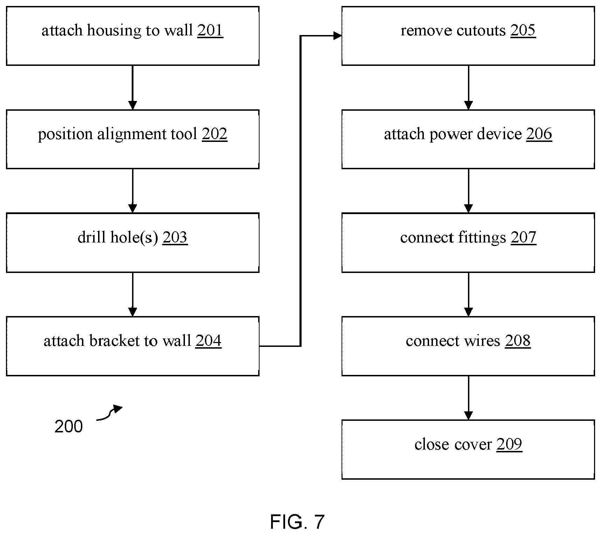

Reference is now made to FIG. 7, which shows, schematically, a flowchart 200 of an example method of installing a wiring box according to aspects of the disclosure. At step 201, wiring box housing 101H of wiring box 101 may be attached to a wall. At step 202, drill hole alignment tool 115 may be positioned in alignment tool recess 113 of wiring box housing 101H. At step 203, a hole may be drilled in the wall. At step 204, a bracket of a power device may be attached to the hole in the wall. At step 205, a set of cut-outs (e.g., 114A, 114AH, 114AL, or 114B) of wiring box housing 101H is removed, wherein the cut-outs removed correspond to the power device and the bracket of the power device installed at step 204. At step 206, the corresponding power device is attached to the bracket of the power device. At step 207, a plurality of fittings 104 are connected between wiring box housing 101H and the power device. At step 208, a plurality of wires is electrically connected between the power device and wiring box housing 101H. At step 209, a cover of wiring box housing 101H is attached to wiring box housing 101H.

Other devices may be included in wiring box 101, such as a switch, a circuit breaker, a relay, a residual-current circuit breaker, a ground fault circuit interrupter, a sensor, a microprocessor, a communication device, an arc detection device, an alarm, and/or a user interfaces.

Following are clauses that describe aspects of the solutions described herein.
Clause 1. An apparatus, comprising:
   a cover; and
   a housing comprising:
      a set of cut-outs, wherein the set of cut-outs is configured to connect fittings between the apparatus and a power device; and
      an alignment tool recess, wherein the alignment tool recess is configured to position a drill hole alignment tool configured for the power device.
Clause 2. The apparatus of clause 1, comprising a ground bar attachment.
Clause 3. The apparatus of clause 2, comprising a ground bar attached to the ground bar attachment.
Clause 4. The apparatus of any one of clauses 1 to 3, comprising a plurality of auxiliary marks surrounding an auxiliary fitting region.
Clause 5. The apparatus of any one of clauses 1 to 4, comprising a plurality of wall attachment holes configured to attach the apparatus to a drywall.
Clause 6. The apparatus of any one of clauses 1 to 5, comprising a plurality of wall attachment holes configured to attach the apparatus to a wall.
Clause 7. The apparatus of any one of clauses 1 to 6, comprising a plurality of sets of cut-outs and a plurality of alignment tool recesses, wherein the plurality of sets of cut-out comprises the set of cut-outs, wherein the plurality of alignment tool recesses comprises the alignment tool recess, wherein the plurality of sets of cut-outs are configured for different power devices, and wherein each of the plurality of alignment tool recesses is configured to align the drill hole alignment tool with at least one of the plurality of sets of cut-outs.
Clause 8. The apparatus of any one of clauses 1 to 7, comprising a plurality of sets of cut-outs and a plurality of alignment tool recesses, wherein the plurality of sets of cut-outs comprises the set of cut-outs, wherein the plurality of alignment tool recesses comprises the alignment tool recess, wherein the plurality of sets of cut-outs are configured for different orientations of the apparatus, and wherein the different orientations of the apparatus are configured for different spatial relationships between the apparatus and the power device.
Clause 9. The apparatus of any one of clauses 1 to 8, comprising a plurality of sets of cut-outs and a plurality of alignment tool recesses, wherein the plurality of sets of cut-outs comprises the set of cut-outs, wherein the plurality of alignment tool recesses comprise the alignment tool recess, wherein the plurality of sets of cut-outs are configured for a plurality of power devices, wherein the plurality of power devices comprise the power device, wherein the plurality of sets of cut-outs are configured for different orientations of the apparatus, wherein the different orientations of the apparatus are configured for different spatial relationships between the apparatus and the plurality of power devices, and wherein each of the plurality of alignment tool recesses is configured to align the drill hole alignment tool with at least one of the plurality of sets of cut-outs.
Clause 10. The apparatus of any one of clauses 1 to 9, wherein the housing and cover comprise rounded corners.
Clause 11. The apparatus of any one of clauses 1 to 10, wherein the alignment tool recess comprises a protrusion, wherein the drill hole alignment tool comprises a tool recess, and wherein the protrusion and the tool recess are configured to align the drill hole alignment tool relative to the set of cut-outs.
Clause 12. The apparatus of any one of clauses 1 to 11, wherein the cover and housing are connected using snap-fit connectors.
Clause 13. The apparatus of clause 12, comprising snap-fit connector release recesses.
Clause 14. A system comprising:
   a drill hole alignment tool;
   a plurality of fittings configured to connect a housing and a power device;
   a ground bar;
   a cover; and
   the housing comprising:
      a set of cut-outs, wherein the set of cut-outs is configured to connect the fittings between the housing and the power device; and
      an alignment tool recess, wherein the alignment tool recess is configured to position the drill hole alignment tool configured for the power device.
Clause 15. An apparatus, comprising:
   a cover; and
   a housing comprising:
      a plurality of sets of cut-outs, wherein each set of the plurality of sets of cut-outs is configured to connect fittings between the apparatus and one of a plurality of power devices; and
      a plurality of alignment tool recesses, wherein each of the plurality of alignment tool recesses is configured to position a drill hole alignment tool configured for at least one of the plurality of power devices.
Clause 16. The apparatus of clause 15, wherein the plurality of sets of cut-outs are configured for different orientations of the apparatus, and wherein the different orientations of the apparatus are configured for different spatial relationships between the apparatus and the plurality of power devices.
Clause 17. A method, comprising:
   attaching a housing of a wiring box to a wall;
   positioning a drill hole alignment tool in an alignment tool recess of the housing;
   drilling a hole in the wall;
   attaching a bracket of a power device to the hole in the wall;
   in the case that cut-outs are not pre-cut holes, removing a set of cut-outs of the housing corresponding to the power device;
   attaching the power device to the bracket;
   connecting a plurality of fittings between the housing and the power device;
   electrically connecting a plurality of wires between the power device and the wiring box; and
   attaching a cover of the wiring box to the housing.
Clause 18. An apparatus, comprising:
   a cover; and
   a housing comprising:
      a plurality of sets of cut-outs, wherein each set of cut-outs is configured to connect fittings between the apparatus and at least one power device of a plurality of power devices.
Clause 19. The apparatus of clause 18, further comprising an alignment tool recess, wherein the alignment tool recess is configured to position a drill hole alignment tool configured for the at least one power device.
Clause 20. The apparatus of any one of clauses 18 to 19, comprising a ground bar attachment.
Clause 21. The apparatus of clause 20, comprising a ground bar attached to the ground bar attachment.
Clause 22. The apparatus of any one of clauses 18 to 21, comprising a plurality of auxiliary marks surrounding an auxiliary fitting region.
Clause 23. The apparatus of any one of clauses 18 to 22, comprising a plurality of wall attachment holes configured to attach the apparatus to a drywall.
Clause 24. The apparatus of any one of clauses 18 to 23, comprising a plurality of wall attachment holes configured to attach the apparatus to a wall.
Clause 25. The apparatus of any one of clauses 18 to 24, comprising a plurality of alignment tool recesses, wherein each of the plurality of alignment tool recesses is configured to align the drill hole alignment tool with at least one of the plurality of sets of cut-outs.
Clause 26. The apparatus of any one of clauses 18 to 25, comprising a plurality of alignment tool recesses, wherein the plurality of sets of cut-outs are configured for different orientations of the apparatus, and wherein the different orientations of the apparatus are configured for different spatial relationships between the apparatus and at least some of the plurality of power devices.
Clause 27. The apparatus of any one of clauses 18 to 26, comprising a plurality of alignment tool recesses, wherein the plurality of sets of cut-outs are configured for the plurality of power devices, wherein the plurality of sets of cut-outs are configured for different orientations of the apparatus, wherein the different orientations of the apparatus are configured for different spatial relationships between the apparatus and at least some of the plurality of power devices, and wherein each of the plurality of alignment tool recesses is configured to align the drill hole alignment tool with at least one of the plurality of sets of cut-outs.
Clause 28. The apparatus of any one of clauses 18 to 27, wherein the housing and cover comprise rounded corners.
Clause 29. The apparatus of any one of clauses 18 to 28, further comprising an alignment tool recess, wherein the alignment tool recess comprises a protrusion, wherein a drill hole alignment tool comprises a tool recess, and wherein the protrusion and the tool recess are configured to align the drill hole alignment tool relative to at least one set of the plurality of sets of cut-outs.
Clause 30. The apparatus of any one of clauses 18 to 29, wherein the cover and housing are connected using snap-fit connectors.
Clause 31. The apparatus of clause 30, comprising snap-fit connector release recesses.
Clause 32. A system comprising:
   a drill hole alignment tool;
   a plurality of fittings configured to connect a housing and a power device;
   a ground bar;
   a cover; and
   the housing comprising:
      a plurality of sets of cut-outs, wherein each set of cut-outs is configured to connect fittings between the apparatus and at least one power device of a plurality of power devices.
Clause 33. The apparatus of clause 32, further comprising an alignment tool recess, wherein the alignment tool recess is configured to position the drill hole alignment tool configured for the at least one power device.

## Claims

1. An apparatus, comprising:
a cover; and
a housing, wherein the housing comprises:
a set of cut-outs, wherein the set of cut-outs are configured to connect fittings between the apparatus and a power device; and
an alignment tool recess, wherein the alignment tool recess is configured to position, relative to the set of cut-outs, a drill hole alignment tool adapted for aligning the power device.

2. The apparatus of claim 1, further comprising a ground bar attachment.

3. The apparatus of any one of claims 1 to 2, further comprising a ground bar attached to the ground bar attachment.

4. The apparatus of any one of claims 1 to 3, further comprising a plurality of auxiliary marks surrounding an auxiliary fitting region.

5. The apparatus of any one of claims 1 to 4, further comprising a plurality of wall attachment holes configured to attach the apparatus to a drywall.

6. The apparatus of any one of claims 1 to 5, further comprising a plurality of wall attachment holes configured to attach the apparatus to a wall.

7. The apparatus of any one of claims 1 to 6, further comprising a plurality of sets of cut-outs and a plurality of alignment tool recesses,
wherein the plurality of sets of cut-out comprises the set of cut-outs,
wherein the plurality of alignment tool recesses comprises the alignment tool recess,
wherein the plurality of sets of cut-outs are configured to connect the apparatus to different power devices, and
wherein each of the plurality of alignment tool recesses is configured to align the drill hole alignment tool with at least one of the plurality of sets of cut-outs.

8. The apparatus of any one of claims 1 to 7, further comprising a plurality of sets of cut-outs and a plurality of alignment tool recesses,
wherein the plurality of sets of cut-outs comprises the set of cut-outs,
wherein the plurality of alignment tool recesses comprises the alignment tool recess,
wherein the plurality of sets of cut-outs are configured for mounting the apparatus in different orientations, and
wherein the different orientations of the apparatus are configured for different spatial relationships between the apparatus and the power device.

9. The apparatus of any one of claims 1 to 8, further comprising a plurality of sets of cut-outs and a plurality of alignment tool recesses,
wherein the plurality of sets of cut-outs comprises the set of cut-outs,
wherein the plurality of alignment tool recesses comprises the alignment tool recess,
wherein the plurality of sets of cut-outs are configured to connect the apparatus to a plurality of power devices,
wherein the plurality of power devices comprises the power device,
wherein the plurality of sets of cut-outs are configured for mounting the apparatus in different orientations,
wherein the different orientations of the apparatus are configured for different spatial relationships between the apparatus and the plurality of power devices, and
wherein each of the plurality of alignment tool recesses is configured to align the drill hole alignment tool with at least one of the plurality of sets of cut-outs.

10. The apparatus of any one of claims 1 to 9, wherein the housing and the cover comprise rounded corners.

11. The apparatus of any one of claims 1 to 10, wherein the alignment tool recess comprises a protrusion, wherein the drill hole alignment tool comprises an alignment tool base recess, and wherein the protrusion and the alignment tool base recess are configured to align the drill hole alignment tool relative to the set of cut-outs.

12. A system comprising:
a drill hole alignment tool;
a plurality of fittings configured to connect a housing and a power device;
a ground bar; and
an apparatus according to any preceding claim.

13. A method, comprising:
attaching a housing of a wiring box to a wall;
positioning a drill hole alignment tool in an alignment tool recess of the housing;
drilling a hole in the wall; attaching a bracket of a power device to the hole in the wall;
removing a set of cut-outs of the housing corresponding to the power device;
attaching the power device to the bracket;
connecting a plurality of fittings between the housing and the power device;
electrically connecting a plurality of wires between the power device and the wiring box; and
attaching a cover of the wiring box to the housing.
